# EUROPEAN PATENT SPECIFICATION

(11) **EP 3 096 902 B1**
(45) Date of publication and mention of the grant of the patent: **27.02.2019**
(21) Application number: 15740014.4
(22) Date of filing: 21.01.2015
(51) Int. Cl.: B22D 11/10, F16F 15/14

(54) **ROTARY VIBRATION ABSORBER**
ROTIERENDER SCHWINGUNGSDÄMPFER
AMORTISSEUR DE VIBRATIONS ROTATIF

(30) Priority: 25.01.2014 DE 102014001019
(43) Date of publication of application: 30.11.2016
(73) Proprietor: BorgWarner Inc., Auburn Hills, MI 48326 (US)
(72) Inventor: BOELLING, Jochen, 76534 Baden-Baden (DE); SCHNEIDER, Florian, 37308 Heilbad Heiligenstadt (DE); HAUCK, Hans Juergen, 74523 Schwaebisch Hall (DE); KACHLER, Marco Valentin, 76684 Östringen (DE); MOSER, Alexander, 68775 Ketsch (DE)
(74) Representative: Leckel, Ulf
(86) International application number: PCT/US2015/012189
(87) International publication number: WO 2015/112559

(56) References cited:
- DE-A1-102008 059 236
- DE-A1-102010 054 303
- KR-B1- 100 845 983
- KR-B1- 101 344 917
- US-A- 4 779 483
- US-A- 5 666 862
- US-A1- 2010 210 365
- US-B1- 6 601 472

## Description

The present invention relates to a rotary vibration absorber having a base part, which is rotatable about an axis of rotation, and having an inertial mass part which is arranged on the base part and which is rotatable relative to the base part counter to the restoring force of a restoring apparatus.

DE 199 07 216 C1 discloses a rotary vibration absorber which has a base part which is rotatable about an axis of rotation and which is in the form of a carrier plate. On the base part there is arranged an inertial mass part which is rotatable relative to the base part counter to the restoring force of a restoring apparatus. The restoring apparatus has a bending spring which extends in a radial direction and which is fastened at one side to the base part and at the other side to the inertial mass part. Furthermore, the restoring apparatus has a sliding block which is guided in a radial direction on the base part and which serves for supporting the bending spring on the base part in the mutually opposite directions of rotation. In this case, the sliding block can, in the direction of extent of the bending spring, be displaced inward or outward relative to the bending spring in the radial direction in order to vary the effective length of the bending spring. Consequently, in this way, a restoring apparatus is created which can be adjusted so as to vary a restoring force characteristic curve of the restoring force acting on the inertial mass part. An increase in the rotational speed of the base part causes the sliding block to move radially outward in the restoring apparatus under centrifugal force action, thus leading to an increased gradient of the restoring force characteristic curve of the restoring force acting on the inertial mass part, whereas a spring element effects a restoring movement of the sliding block with decreasing rotational speed.

The known rotary vibration absorber thus has the disadvantage of requiring a bending spring, which is relatively large and thus takes up a large amount of structural space, of the restoring apparatus, especially as said bending spring must be fixed or supported at one side on the inertial mass part and at the other side on the base part. The latter requirement for support of the bending spring at one side on the base part and at the other side on the inertial mass part also has the consequence that the arrangement of the bending spring on the rotary vibration absorber is substantially predefined. Consequently, a flexible arrangement of the bending spring is not possible in the case of rotary vibration absorbers of the described type.

A similar rotary vibration absorber is known from DE 10 2008 059 236 Al, said absorber using spring elements having the form of coil springs. The coil springs interact with the inertial mass part on the one hand and the base part on the other hand. Further, the coil springs may be moved in the radial direction relative to the inertial mass part and the base part, thereby varying the force characteristic curve of the restoring force acting on the inertial mass part. However, it is a drawback of the known absorber, that the arrangement of the coil springs is basically predefined, since they need to interact directly with the inertial mass part on one side and the base part on the other side.

KR 101 344 917 B1 describes a torsional vibration damper with a first part, a second part and a spring device acting between said parts, such that the first and second part are rotationally coupled in a flexible manner. There is further provided a lever element being coupled to a mass part, said lever element being rotatable relative to the first and second part together with the mass part. Thus, a restoring force of the spring device also acts on the mass part. However, a variation of the characteristic curve of the restoring force is not possible, such that the known damper could not react in a flexible fashion to operating states in a drivetrain. A similar device is known from DE 10 2010 054 303 A1.

It is therefore an object of the present invention to provide a rotary vibration absorber of the generic type which has a simplified and structural space-saving construction, wherein a particularly flexible arrangement of the spring device should be possible, and which can react in flexible fashion to operating states within a drivetrain.

Said object is achieved by means of the features specified in patent claim 1. The subclaims relate to advantageous embodiments of the invention.

The rotary vibration absorber according to the invention has a base part which is rotatable about an axis of rotation and which can be fastened rotationally conjointly for example to an output side of a driven shaft, wherein in this case, the base part is preferably, in the region of the axis of rotation, connected rotationally conjointly to the output side of a driven shaft. The base part may for example be formed by a base or carrier plate extending substantially in a radial direction. The rotary vibration absorber furthermore has an inertial mass part which is arranged on the base part. In this case, the inertial mass part may be arranged either directly or indirectly on the base part, for example indirectly via the restoring apparatus described below. Accordingly, the rotary vibration absorber also has a restoring apparatus, wherein the inertial mass part can be rotated relative to the base part counter to the restoring force of said restoring apparatus. The restoring apparatus has a spring device for generating an actuating force, wherein the spring device may for example have one or more spring elements. Furthermore, the restoring apparatus has a lever element which is pivotable about an articulation point. Accordingly, the pivotable lever element may for example be articulated on the base part indirectly via the articulation point or directly. It is preferable here for the lever element to be pivotable in a plane spanned by the radial directions of the rotary vibration absorber and consequently about an axis which extends in the axial directions of the rotary vibration absorber and through the articulation point. Moreover, the pivotable lever element is preferably a flexurally rigid or stiff lever element. The lever element is arranged between the spring device, at one side, and the inertial mass part, at the other side, such that the actuating force generated by the spring device can be transmitted to the inertial mass part so as to generate the restoring force which acts on the inertial mass part. This firstly has the advantage that the spring device, which generates the actuating force, of the restoring apparatus does not need to act directly on the inertial mass part, and can instead be arranged at some other location on the base part of the rotary vibration absorber, permitting a space-saving and flexible arrangement of the spring device on the rotary vibration absorber. Secondly, owing to the lever element, it is possible for a lever ratio to be set or predefined, based on which the restoring force acting on the inertial mass part is greater or smaller than the actuating force generated by the spring device of the restoring apparatus. It is accordingly possible for the stiffness of the restoring apparatus to be increased in targeted fashion through presetting of the lever ratio, without the need for a particularly rigid spring device for generating the actuating force. It can thus be stated firstly that the spring device need merely have a low spring stiffness and can consequently be of particularly space-saving form, wherein moreover, a flexible arrangement of the spring device on the base part of the rotary vibration absorber is possible. It is furthermore the case that an adjustment apparatus is provided by means of which the restoring apparatus can be adjusted with variation of a restoring force characteristic curve of the restoring force acting on the inertial mass part. Accordingly, it is for example possible for the gradient of the restoring force characteristic curve of the restoring force acting on the inertial mass part to be increased or reduced through adjustment of the restoring apparatus, such that the stiffness of the restoring apparatus is increased or reduced accordingly. Consequently, a restoring apparatus is provided which can react in flexible fashion to operating states within a drivetrain.

In a preferred embodiment of the rotary vibration absorber according to the invention, the restoring apparatus is designed such that the lever ratio of the lever element of the restoring apparatus can be varied by means of the adjustment apparatus. A particularly simple restoring apparatus which is insusceptible to faults is created in this way. In this embodiment, it is furthermore preferable if the above-mentioned articulation point of the lever element is adjustable and/or displaceable, that is to say variable in terms of its position, so as to vary the lever ratio of the lever element. Accordingly, the articulation point may for example be arranged in movable fashion on the base part, wherein a movement of the articulation point in the radial direction relative to the base part is preferable. Moreover, the articulation point is preferably formed by a projection which is arranged in adjustable or displaceable fashion on the base part.

In an advantageous embodiment of the rotary vibration absorber according to the invention, the lever element has a first lever section between an actuating force action point and the articulation point and has a second lever section between the articulation point and a restoring force action point, wherein the length of the first and second lever section can be varied by rotation of the inertial mass part relative to the base part, with the lever ratio being substantially maintained. The variation, that is to say elongation or shortening, of the first and second lever sections may in this case be realized in any desired manner; for example, the stated lever sections may for example be of telescopic form. Regardless of the respective design variant, the elongation or shortening of the lever sections makes it possible for the inertial mass part to be rotated relative to the base part while maintaining a predetermined radial spacing to the axis of rotation of the base part. This embodiment also encompasses design variants in which, owing to the design configuration, in particular in the region of articulation point, actuating force action point and/or restoring force action point, rotation of the inertial mass part relative to the base part can result in slight changes in the lever ratio. Such a slight change may arise for example owing to the fact that, during the rotation of the inertial mass part relative to the base part, the actuating force action point is moved along a straight line, possibly a straight line parallel to a radial line, whereas the restoring force action point is moved along a circular path around the axis of rotation. In this case, and in other cases, the design should however preferably be configured such that the lever ratio is varied by at most 5%, particularly preferably by at most 3% or at most 1%, as a result of rotation of the inertial mass part relative to the base part.

In a further preferred embodiment of the rotary vibration absorber according to the invention, two of the abovementioned points, that is to say two points out of articulation point, actuating force action point and restoring force action point, are displaceable relative to the lever element with variation of the length of the lever sections. Here, it is preferable if the articulation point on the one hand and the actuating force action point or the restoring force action point on the other hand are displaceable relative to the lever element with variation of the length of the lever sections, whereas the remaining point is particularly preferably arranged immovably on the lever element.

In a particularly advantageous embodiment of the rotary vibration absorber according to the invention, the restoring apparatus can be adjusted into a blocking state in which the restoring apparatus interacts with the inertial mass part so as to hinder, preferably by frictional contact, or prevent, preferably by positive locking, a rotation of the inertial mass part relative to the base part. Consequently, the rotation of the inertial mass part relative to the base part is in this embodiment hindered or prevented by the restoring apparatus in the blocking state thereof, which is an advantage in particular during starting processes. Consequently, in this embodiment, the rotary vibration absorber is highly suited to a drivetrain which has a so-called automatic start-stop facility. In this embodiment, it is furthermore preferable if the above-mentioned adjustable or displaceable projection, which forms the articulation point, of the restoring apparatus interacts with the inertial mass part. Accordingly, it is for example possible for said adjustable or displaceable projection, in the corresponding state, to realize frictional contact with the inertial mass part or interact in positively locking fashion with the inertial mass part, such that a rotation of the inertial mass part relative to the base part is hindered or prevented. In this case, the displaceable or adjustable projection may for example interact with the inertial mass part indirectly, possibly via the support part described in more detail further below, or directly.

In a further advantageous embodiment of the rotary vibration absorber according to the invention, the spring device for generating the actuating force has a first spring element and a second spring element, which act on the lever element oppositely to one another. In this embodiment, it is preferable for the two spring elements that act on the lever element oppositely to one another to be in the form of compression springs, possibly helical compression springs.

In a further advantageous embodiment of the rotary vibration absorber according to the invention, the lever element is arranged in an initial state under preload of the first and second spring elements of the spring device. This has the advantage that a particularly high stiffness of the spring device is attained in a rotational angle range of the lever element around the initial state. In this embodiment, it is moreover preferable for the first and second spring element to be preloaded such that they both exert a respective actuating force on the lever element over the maximum rotational angle range of the inertial mass part relative to the base part. In this way, increased stiffness of the spring device is ensured over the maximum rotational angle range of the inertial mass part.

In a further preferred embodiment of the rotary vibration absorber according to the invention, the first spring element and the second spring element each have a longitudinal axis which is offset radially outward in relation to the axis of rotation. It is ensured in this way that the base part of the rotary vibration absorber can be securely rotationally conjointly connected, in the region of the axis of rotation, to an outlet side of a component, for example the output side of a flywheel mass, the output side of a drive unit or the output side of a torsional vibration damper, without the spring elements of the spring device posing a hindrance or restriction. In this context, it has proven to be advantageous for the spring elements, and not only the longitudinal axes thereof, to be spaced apart in the radial direction from the axis of rotation of the base part.

In a further preferred embodiment of the rotary vibration absorber according to the invention, the adjustment apparatus has an actuation part arranged on the base part. The actuation part can be moved relative to the base part with adjustment of the restoring apparatus.

In a further particularly preferred embodiment of the rotary vibration absorber according to the invention, the actuation part is displaceable in translational fashion relative to the base part with adjustment of the restoring apparatus. It is preferable here if the actuation part is displaceable in translational fashion relative to the base part such that said actuation part moves along a straight line, which is possibly arranged parallel to a radial line of the rotary vibration absorber.

In a further particularly advantageous embodiment of the rotary vibration absorber according to the invention, the actuation part is rotatable about the axis of rotation with adjustment of the restoring apparatus relative to the base part.

It would basically be possible for the above-mentioned actuation part, regardless of its respective design, to interact directly with the restoring apparatus in order to adjust the latter. However, to obtain a more flexible arrangement of the actuation part on the base part, it is particularly preferable for the actuation part to interact by way of an actuation lever, possibly two actuation levers articulatedly connected to one another, with the restoring apparatus, preferably with the articulation point thereof, possibly with a projection that forms the articulation point. In the case of two actuation levers articulatedly connected to one another, it is preferable for a first actuation lever to be articulated at one side on the actuation part and at the other side on a first end of the second actuation lever, whereas the second actuation lever is articulated on the base part, wherein that end of the second actuation lever which is remote from the first actuation lever interacts with the restoring apparatus, possibly with the articulation point or with a projection which forms the articulation point. If the second actuation lever interacts with the articulation point or with the projection which forms the articulation point, it is furthermore preferable if the articulation point or the projection which forms the articulation point is displaceable relative to the second actuation lever in the direction of extent thereof. This may be realized for example by virtue of the articulation point or the projection which forms the articulation point being guided in displaceable fashion in a guide in the second actuation lever.

In a further preferred embodiment of the rotary vibration absorber according to the invention, the actuation part can be or is hydraulically driven. Whereas, in the case of the rotary vibration absorber according to DE 199 07 216 C1, only an adjustment of the restoring apparatus is realized under the action of centrifugal and spring force, it is thus the case in this embodiment that a hydraulic drive is used for the actuation part, which can be provided in a significantly more space-saving and flexible manner on the rotary vibration absorber than is the case if the actuation part is driven only by a spring force. Nevertheless, an actuation part that can be or is driven hydraulically may additionally be driven by a spring force. Accordingly, this also encompasses embodiments in which the actuation part is driven hydraulically in one movement direction and is driven by a spring force in the opposite movement direction.

In a preferred embodiment of the rotary vibration absorber according to the invention, the actuation part which can be or is driven hydraulically has a slave piston or a slave cylinder, whereas a corresponding slave cylinder or slave piston is arranged on the base part. In this embodiment, it is preferable if the slave piston is provided on the actuation part, whereas the slave cylinder, in which the slave piston of the actuation part is arranged, is arranged on the base part. Here, the expressions "slave piston" and "slave cylinder" are to be understood in the broadest sense and do not constitute a restriction with regard to their geometric design; rather, it is crucial that the slave piston and slave cylinder delimit a hydraulic functional space, such as for example the first and/or second slave chamber described in more detail further below, and, in interaction, have the function of a hydraulic piston-cylinder arrangement.

In a further particularly preferred embodiment of the rotary vibration absorber according to the invention, there is arranged on the base part a master cylinder which is arranged radially further inward than the slave cylinder and which serves for pressurizing the slave cylinder and in which there is arranged a driveable master piston. In this embodiment, it is moreover preferable for the slave cylinder to be in the form of an annular cylinder and for the master piston to be in the form of an annular piston, wherein the annular piston is preferably arranged in the annular cylinder so as to be displaceable in an axial direction of the rotary vibration absorber.

As already indicated above, the master piston can be driven, with a drive apparatus being provided for this purpose. The drive apparatus, which can also be referred to as force action apparatus, is decoupled in terms of rotational drive from the master piston, wherein this is realized preferably by means of an engagement bearing. In this embodiment, it is furthermore preferable for the drive apparatus to be of static form or to be formed by a static piston-cylinder arrangement. Accordingly, the master piston can interact, for example in a manner decoupled in terms of rotational drive, with a piston of the static piston-cylinder arrangement, wherein a displacement of the piston of the static piston-cylinder arrangement in the axial directions effects a corresponding displacement of the master piston within the master cylinder.

In a further advantageous embodiment of the rotary vibration absorber according to the invention, the actuation part, the slave piston or the master piston is movable counter to the spring force of a restoring spring in at least one direction of movement. Consequently - as has already been indicated above - the actuation part, the slave piston or the master piston can be driven hydraulically in a first movement direction and by the spring force of the restoring spring in the opposite, second movement direction.

In a further particularly preferred embodiment of the rotary vibration absorber according to the invention, the slave cylinder and the master cylinder are in the form of double-acting cylinders. Accordingly, in this embodiment, it is preferable if a first slave chamber of the slave cylinder is connected in terms of flow to a first master chamber of the master cylinder and a second slave chamber of the slave cylinder is connected in terms of flow to a second master chamber of the master cylinder, and it is particularly preferable if a closed hydraulic system is formed between the master cylinder and the slave cylinder.

In a further preferred embodiment of the rotary vibration absorber according to the invention, to permit targeted and precise adjustment of the restoring apparatus, at least one sensor for the indirect or direct detection of the state of the restoring apparatus is provided. Direct detection of the state of the restoring apparatus is to be understood to mean detection by means of a sensor which is assigned directly to a component of the restoring apparatus, whereas an indirect detection of the state of the restoring apparatus is to be understood to mean a detection by means of a sensor which is assigned to a component, for example the actuation part, which interacts with the restoring apparatus. By virtue of the fact that the state of the restoring apparatus can be detected by means of the at least one sensor, precise adjustment into a predetermined state of the restoring apparatus is possible, and any deviation from the predetermined state of the restoring apparatus can be detected, such that appropriate control countermeasures can be taken.

In a further advantageous embodiment of the rotary vibration absorber according to the invention, the sensor is in the form of a co-rotating sensor for detecting the position of the actuation part or of the articulation point, possibly of the projection which forms the articulation point, relative to the base part. Accordingly, in this variant, use may for example be made of a sensor which is fastened to the actuation part, to the articulation point, possibly to the projection which forms the articulation point or to the base part, and which thus co-rotates with the respective part. Alternatively, however, the at least one sensor may also be in the form of a static sensor for detecting the position of the actuation part relative to the base part, wherein said sensor is then not of co-rotating form. Accordingly, the at least one static sensor may for example be fastened to a static housing of the rotary vibration absorber.

In a further preferred embodiment of the rotary vibration absorber according to the invention, the static sensor is designed for detecting the rotational position of the actuation part and for detecting the rotational position of the base part. Consequently, only one static sensor is used for detecting both the rotational position of the actuation part and the rotational position of the base part. Alternatively, a first static sensor may be provided for detecting the rotational position of the actuation part and a second static sensor may be provided for detecting the rotational position of the base part. Regardless of whether only one static sensor or two static sensors are used, it is possible from the rotational positions of the actuation part and of the base part to determine the rotational offset between the actuation part and base part, which is representative of the position of the actuation part relative to the base part, wherein for this purpose, the rotary vibration absorber or the at least one sensor may be assigned a corresponding evaluation device. On the basis of the rotational offset between the actuation part and base part, it is thus possible to infer the position of the actuation part relative to the base part, and thus the state of the restoring apparatus.

In a further advantageous embodiment of the rotary vibration absorber according to the invention, the at least one static sensor is in the form of a contactless, preferably optical, photoelectric or magnetic sensor. Alternatively, the at least one static sensor may however also be in the form of a contact-type, preferably sliding-contact sensor. Regardless of the respective design variant of the at least one static sensor, the at least one static sensor is particularly preferably in the form of an incremental encoder, possibly gearwheel encoder.

In a further particularly advantageous embodiment of the rotary vibration absorber according to the invention, the inertial mass part is rotatable relative to the base part while maintaining a predetermined radial spacing to the axis of rotation. Consequently, in this embodiment, it is possible for vibrations or movements of the inertial mass part in the radial direction to be prevented, such that compensation of such vibrations or movements of the inertial mass part in the radial direction can be disregarded from a design aspect, which leads to a simplified construction of the rotary vibration absorber.

In a further advantageous embodiment of the rotary vibration absorber according to the invention, the inertial mass part is of annular form. In this way, only one inertial mass part has to be provided, wherein owing to the annular form, imbalances are avoided and targeted balancing is rendered superfluous.

The inertial mass part may for example be supportable or supported at the inside in the radial direction directly or indirectly on the base part, on the greatest outer diameter of the base part, or on the greatest outer diameter of that side of the base part which faces toward the inertial mass part. In a further particularly preferred embodiment of the rotary vibration absorber according to the invention, at least one support part is provided which is connected rotationally conjointly to the inertial mass part and which, supporting the inertial mass part at the inside in the radial direction, is or can be supported in the region of a diameter which is smaller than the greatest outer diameter of the base part or smaller than the greatest outer diameter of that side of the base part which faces toward the inertial mass part. Owing to the relatively small diameter in the region of which the inertial mass part can be or is supported by means of the support part, the support or bearing surface area is reduced considerably, resulting in lower friction forces as the inertial mass part rotates relative to the base part. Moreover, the support in the region of a relatively small diameter simplifies the manufacture of the rotary vibration absorber.

In a further advantageous embodiment of the rotary vibration absorber according to the invention, the support part is or can be supported at the inside in the radial direction substantially in the region of the same diameter as the base part. Here, the support part does not imperatively have to be supported or supportable at the inside in the radial direction at the same diameter as the base part, and instead, the diameter at which the support part is or can be supported at the inside in the radial direction may deviate by up to 10% from the diameter at which the base part is or can be supported at the inside in the radial direction, that is to say may be as much as 10% greater or smaller than the diameter at which the base part is or can be supported at the inside in the radial direction.

In a further preferred embodiment of the rotary vibration absorber according to the invention, the support part is of disk-shaped form, in order to firstly ensure reliable support at the inside in the radial direction and secondly ensure a small axial structural length of the support part. It is preferable here for the disk-shaped support part to have cutouts or windows, which may for example be provided so as to form interposed spokes or struts in the support part. The cutouts or windows may for example also serve for the leadthrough of other components of the rotary vibration absorber, for example of the spring device or of the projection which forms the articulation point.

In a further advantageous embodiment of the rotary vibration absorber according to the invention, the support part at least partially, preferably over its entire radial extent, has a smaller extent in an axial direction than the inertial mass part itself.

In a further advantageous embodiment of the rotary vibration absorber according to the invention, the support part is arranged between two disks of the base part as viewed in the axial direction. It is preferable here for the disks to have cutouts or windows, which may for example be provided so as to form interposed spokes or struts in the disks.

In a further particularly advantageous embodiment of the rotary vibration absorber according to the invention, the support by the support part is realized with a spacing between that side of the inertial mass part which points inward in the radial direction and that side of the base part which faces outward in the radial direction toward the inertial mass part. Consequently, in this embodiment, there is no need for that side of the inertial mass part which faces inward in the radial direction to be supported on that side of the base part which faces outward in the radial direction toward the inertial mass part, such that here, no friction is generated and there is no need for increased manufacturing outlay. In this embodiment, it is moreover preferable if the inertial mass part can be or is supported toward the inside in the radial direction exclusively via the support part, so as to eliminate any points of friction with the base part and simplify the manufacture of the rotary vibration absorber.

The invention will be explained in more detail below on the basis of exemplary embodiments and with reference to the appended drawings. In the drawings:
Figure 1 shows a schematic side view of an embodiment of the rotary vibration absorber according to the invention,
Figure 2 shows a partial front view of the rotary vibration absorber from Figure 1 in a first design variant,
Figure 3 shows a partial front view of the rotary vibration absorber from Figure 1 in a second design variant,
Figure 4 shows a partial front view of the rotary vibration absorber from the preceding figures in the region of the articulation point.

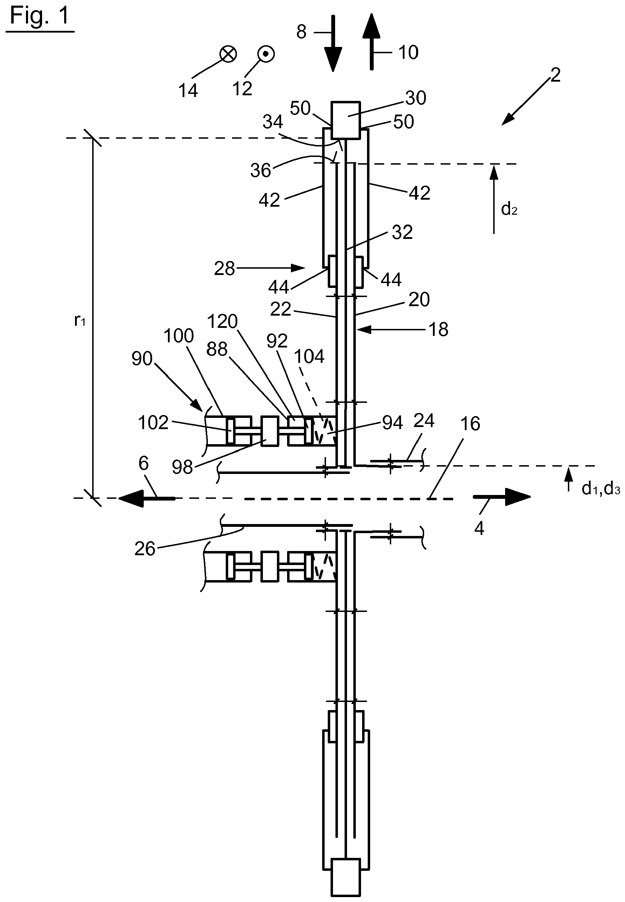

Figure 1 shows a schematic side view of an embodiment of the rotary vibration absorber 2 according to the invention. The mutually opposite axial directions 4, 6, the mutually opposite radial directions 8, 10 and the mutually opposite circumferential directions 12, 14 of the rotary vibration absorber 2 are indicated on the basis of corresponding arrows, wherein the circumferential directions 12, 14 may also be referred to as rotational directions 12, 14. The rotary vibration absorber 2 has an axis of rotation 16 extending in an axial direction 4, 6.

The rotary vibration absorber 2 has a base part 18 which is rotatable about the axis of rotation 16. The base part 18 is formed substantially by two disks 20, 22 which are situated opposite one another in the axial direction 4, 6, wherein the two disks 20, 22 are spaced apart from one another in the axial direction 4, 6 but are connected rotationally conjointly to one another. Here, the two disks 20, 22 of the base part 18 each extend substantially in a plane spanned by the radial directions 8, 10. The base part 18 is, to the inside in the radial direction 10, connected rotationally conjointly via the disk 20 to an output hub 24, wherein the output hub 24 is for example the output hub of a flywheel mass (not illustrated in any more detail) or of a drive unit (not illustrated in any more detail), for example of an internal combustion engine. The output hub 24 may likewise be the output hub of a torsional vibration damper or the like, that is to say a unit arranged in the torque transmission path of a drivetrain. Furthermore, the base part 18 is, to the inside in the radial direction 10, connected rotationally conjointly, in this case via the disk 22, to an input hub 26. The input hub 26 may for example be the input hub of a clutch device, preferably of a multiple clutch device, or of a transmission. For weight-saving purposes, cutouts or windows may be provided in the disks 20, 22 of the base part 18 so as to form interposed struts or spokes.

On the base part 18 of the rotary vibration absorber 2 there is arranged an inertial mass part 30, which is rotatable relative to the base part 18 in the circumferential directions 12, 14 about the axis of rotation 16 counter to the restoring force of a restoring apparatus 28. The inertial mass part 30 is of annular form, that is to say is of encircling form in the circumferential direction 12, 14, and is in a nested arrangement with the base part 18 substantially in the radial direction 8, 10. The inertial mass part 30 is connected rotationally conjointly to a disk-shaped support part 32. The disk-shaped support part 32, which in turn may have a multiplicity of windows or cutouts, has a smaller extent in the axial direction 4, 6 than the inertial mass part 30 and extends inward in the radial direction 10 from the inertial mass part 30, wherein the disk-shaped support part 32 is arranged or runs between the disks 20, 22 of the base part 18 as viewed in the axial direction 4, 6.

The support part 32 serves for the indirect support of the inertial mass part 30 at the inside in the radial direction 8, 10. Accordingly, the support part 32 can be or is supported at the inside in the radial direction 8, 10 in the region of a diameter d₁ in order to indirectly support the inertial mass part 30 at the inside in the radial direction 8, 10, wherein in the embodiment illustrated, the support is realized on the input hub 26. Alternatively, the support at the inside in the radial direction 8, 10 may also be realized on a section of the base part 18 or on a section of the disks 20, 22 of the base part 18. Moreover, it is likewise conceivable for the support at the inside in the radial direction 8, 10 to be realized on the output hub 24.

The diameter d₁ is smaller than the greatest outer diameter d₂ of the base part 18. Moreover, the diameter d₁ corresponds substantially to the diameter d₃ on which the base part 18 is supported at the inside in the radial direction 8, 10 on the input hub 26. In other words, the support part 32 is or can be supported at the inside in the radial direction 8, 10 substantially in the region of the same diameter d₃ as the base part 18. In this case, it is preferable for a plain bearing to be formed between that side of the support part 32 which points inward in the radial direction 10 and the input hub 26, alternatively the output hub 24 or a section of the base part 18. Owing to the relocation of the diameter d₁ to the inside in the radial direction 10 proceeding from the diameter d₂, the friction forces occurring here are low, wherein the manufacture of the plain bearing or of an alternative radial bearing is also simplified. As an alternative to the plain bearing, a rolling bearing could for example be used as a radial bearing.

As can also be seen from Figure 1, the support of the inertial mass part 30 on the support part 32 is realized with a spacing between that side 34 of the inertial mass part 30 which faces inward in the radial direction 10 and that side 36 of the base part 18 which faces outward in the radial direction 8 toward the inertial mass part 30, such that no support and/or friction are generated here. Moreover, the inertial mass part 30 can be or is supported toward the inside in the radial direction 10 exclusively via the support part 32.

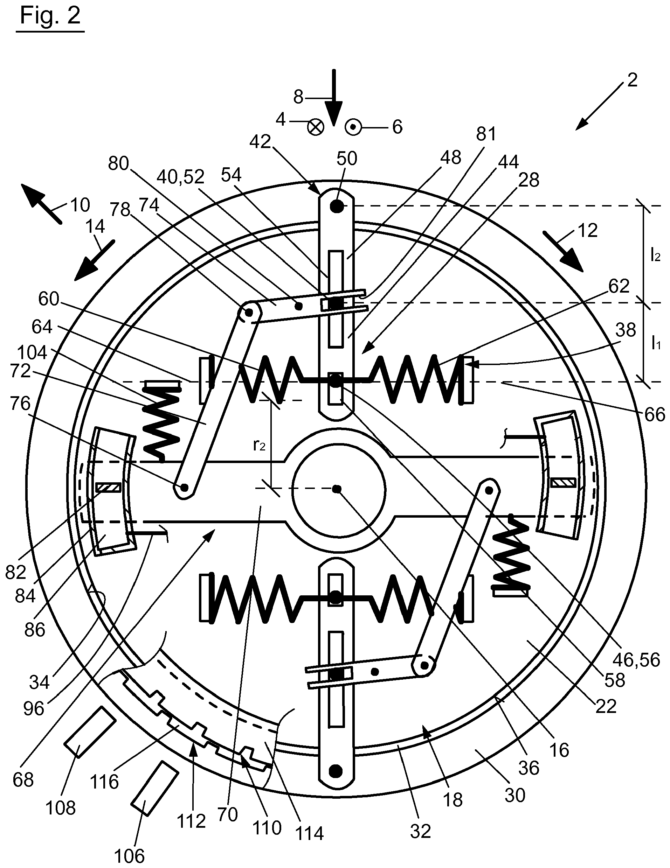

Below, a design variant of the restoring apparatus 28 from Figure 1 will be described in more detail with reference to Figure 2. The restoring apparatus 28 is composed substantially of a spring device 38 for generating an actuating force and of at least one lever element 42 which is pivotable about an articulation point 40. The lever element 42, which is in the form of a flexurally rigid or stiff lever element 42, extends substantially in the radial direction 8, 10 in the initial state shown in Figure 2, wherein the lever element 42 is articulated on the base part 18 so as to be pivotable about the articulation point 40. Consequently, the lever element 42 is pivotable about an axis extending in the axial direction 4, 6 through the articulation point 40. A first lever section 44 extends between an actuating force action point 46, at which the actuating force of the spring device 38 acts and about which the lever element 42 is pivotable, and the articulation point 40, wherein the first lever section 44 extends substantially inward in the radial direction 10 proceeding from the articulation point 40. Furthermore, the lever element 42 has a second lever section 48 which extends substantially outward in the radial direction 8 proceeding from the articulation point 40 to a restoring force action point 50.

The first lever section 44 has a length l₁, whereas the second lever section 48 has a length l₂. At the restoring force action point 50, the lever element 42 is pivotably connected to the inertial mass part 30 such that the restoring force can be transmitted to the inertial mass part 30 via the restoring force action point 50. The lever ratio of the lever element 42 is thus l₁/l₂, meaning l₁ divided by l₂. An actuating force exerted on the actuating force action point 46 by the spring device 38 can therefore be transmitted to the inertial mass part 30 via the lever element 42 so as to generate the restoring force, acting via the restoring force action point 50, on the inertial mass part 30.

The lever ratio l₁/l₂ may however be varied by adjustment and/or displacement of the articulation point 40 in the radial direction 8 or 10. For this purpose, a projection 52 protruding in the axial direction 4, 6 is provided on the base part 18, which projection extends, so as to form the articulation point 40, into an elongate guide 54 within the lever element 42, wherein the projection 52 is arranged on the base part 18 so as to be adjustable or displaceable, and consequently variable in terms of position, in the radial direction 8, 10 for the purposes of varying the lever ratio l₁/l₂. It is consequently possible for the restoring apparatus 28 to be adjusted - in this case in continuously variable fashion - with variation of a restoring force characteristic curve of the restoring force acting on the inertial mass part 30 at the restoring force action point 50.

The inertial mass part 30 can be rotated relative to the base part 18 while maintaining a predetermined radial spacing r₁ to the axis of rotation 16 of the rotary vibration absorber 2. To permit this in the embodiment illustrated, the lengths l₁ and l₂ of the lever sections 44, 48 can be varied, that is to say shortened or lengthened, by rotating the inertial mass part 30 in the circumferential directions 12, 14 relative to the base part 18, with the lever ratio l₁ / l₂ substantially being maintained. For this purpose, it is possible - as already indicated above - for the articulation point 40, or the projection 52 which forms the articulation point 40, to be displaced relative to the lever element 42 by virtue of the projection 52 being guided in the guide 54 in the lever element 42 so as to be displaceable in the direction of extent of said lever element. Furthermore, at least one of the two remaining points, that is to say either the restoring force action point 50 or the actuating force action point 46, is also displaceable relative to the lever element 42. In the example illustrated, the restoring force action point 50 is formed immovably on the lever element 42, whereas the actuating force action point 46 can be displaced relative to the lever element 42. To form the actuating force action point 46, there is in turn provided a projection 56 which protrudes in the axial direction 4, 6 and which is guided displaceably in a guide 58 in the lever element 42.

The spring device 38 has a first spring element 60 and a second spring element 62. The two spring elements 60, 62 are each in the form of compression springs - in this case helical compression springs - and act on the lever element 42 oppositely to one another via the actuating force action point 46 or via the projection 56 which forms the actuating force action point 46. In this case, it is however not necessary for the two spring elements 60, 62 to act directly on the projection 56, it rather being preferable - in a manner which is however not illustrated - for the spring elements 60, 62 to act on both sides of a displaceable load-bearing part on which the protruding projection 56 is arranged, said projection extending into the guide 58 so as to form the actuating force action point 46.

The lever element 42 is arranged in the initial state shown in the figures under preload of the first spring element 60 and of the second spring element 62. Accordingly, the two spring elements 60, 62 are each preloaded in the initial state, in which the spring elements 60, 62 are supported at one side on the base part 18 and at the other side on the lever element 42 via the projection 56. The two spring elements 60, 62 extend in each case along a longitudinal axis 64, 66 which is offset outward in the radial direction 8 in relation to the axis of rotation 16 and is arranged in a plane spanned by the radial directions 8, 10. In this case, the longitudinal axes 64, 66 extend parallel to a radial line, extending in the radial directions 8, 10, of the rotary vibration absorber 2. The longitudinal axes 64, 66 are furthermore offset outward in the radial direction 8 in relation to the axis of rotation 16, such that the spring elements 60, 62 are themselves spaced apart from the axis of rotation 16 in the radial direction 8, as indicated by the radial spacing r₂. Also, the longitudinal axes 64, 66 of the two spring elements 60, 62 are arranged along a common straight line, that is to say the two longitudinal axes 64, 66 are arranged in alignment with one another.

The first and second spring elements 60, 62 are preloaded in the initial state such that the two spring elements 60, 62 exert a respective actuating force on the lever element 42 over the maximum rotational angle range of the inertial mass part 30 relative to the base part 18. Owing to the preload of the two spring elements 60, 62, the spring device 28 has an actuating force characteristic curve which has an increased gradient in a rotational angle range around the initial state of the lever element 42, such that the stiffness of the spring device 28 is increased in said rotational angle range. As already mentioned above, said rotational angle range should fully encompass the maximum rotational angle range of the inertial mass part 30 in order to realize an increased stiffness of the spring device 28 over the maximum rotational angle range of the inertial mass part 30 relative to the base part 18.

The result is a correspondingly configured restoring force characteristic curve for the restoring force acting on the inertial mass part 30 in the region of the restoring force action point 50. To increase the stiffness of the restoring apparatus 28, the articulation point 40 can be adjusted or displaced outward in the radial direction 8 with an enlargement of the lever ratio l₁/l₂, such that the restoring force characteristic curve is varied. By means of said measure, the gradient of the restoring force characteristic curve is increased. By contrast, if it is sought to decrease the stiffness of the restoring apparatus 28, then the articulation point 40 is adjusted or displaced inward in the radial direction 10, such that the lever ratio l₁/l₂ is reduced and the restoring force characteristic curve has a reduced gradient.

To be able to adjust the restoring apparatus 28 with variation of the restoring force characteristic curve of the restoring force acting on the inertial mass part 30, the rotational vibration absorber 2 also has an adjustment apparatus 68, with a first design variant of the adjustment apparatus 68 being illustrated in Figure 2. As can be seen from Figure 2, the rotary vibration absorber 2 has two restoring apparatuses 28 which are arranged opposite one another on the base part 18, wherein the adjustment apparatus 68 effects an equal adjustment of both restoring apparatuses 28, 28. Consequently, one adjustment apparatus 68 is provided for two or more restoring apparatuses 28.

The adjustment apparatus 68 has an actuation part 70 arranged on the base part 18. In the design variant of Figure 2, the actuation part 70 is in the form of an element which is elongate in the radial direction 8, 10 and which extends across the axis of rotation 16 in the radial directions 8, 10 and which can rotate about the axis of rotation 16 with adjustment of the restoring apparatus 28 relative to the base part 18. In this case, the actuation part 70 interacts, via at least one actuation lever, with the articulation point 40 or with the projection 52 which forms the articulation point 40. In the embodiment illustrated, a first actuation lever 72 and a second actuation lever 74 are provided for this purpose. The first actuation lever 72 is articulated on the actuation part 70 at a point 76, such that the first actuation lever 72 is fastened to the actuation part 70 so as to be pivotable about an axis extending in the axial direction 4, 6 through the point 76. By contrast, at its end remote from the actuation part 70, the first actuation lever 72 is articulatedly connected to the second actuation lever 74. Accordingly, the first actuation lever 72 is fastened to the second actuation lever 74 at the point 78 so as to be pivotable about an axis extending in the axial directions 4, 6 through the point 78. By contrast, the second actuation lever 74 is arranged on the base part 18 so as to be pivotable about an articulation point 80 which is fixed on the base part 18. By contrast, by way of its end section remote from the first actuation lever 72 or from the point 78, the second actuation lever 74 interacts with the articulation point 40 or with the projection 52 which forms the articulation point 40 of the restoring apparatus 28. Accordingly, in the embodiment illustrated, there is provided in the second actuation lever 74 a receptacle 81 into which the projection 52 extends, such that the projection 52 is engaged behind by the second actuation lever 74 in both radial directions 8, 10, wherein the receptacle 81 is designed such that the projection 52, and thus the articulation point 40 of the restoring apparatus 28, can be displaced relative to the second actuation lever 74 in the direction of extent of the second actuation lever 74 when the articulation point 40 is displaced or adjusted by means of the adjustment apparatus 68.

If the actuation part 70 is rotated relative to the base part 18 in the circumferential direction 12 about the axis of rotation 16, the actuation levers 72, 74 have the effect that the articulation point 40 or the projection 52 which forms the articulation point 40 is displaced in the radial direction 10 relative to the base part 18, whereas a rotation of the actuation part 70 in the circumferential direction 14 relative to the base part 18 results in a displacement or adjustment of the articulation point 40 or of the projection which forms the articulation point 40, toward the outside in the radial direction 8. In this case, each of the two articulation points 40 of the two restoring apparatuses 28 is assigned both a first and a second actuation lever 72, 74 of the above-described type, as can be seen from Figures 1 and 2.

The actuation part 70 may be actively driven in order to adjust the restoring apparatus 28. Accordingly, the actuation part 70 is in the form of a hydraulically driveable or driven actuation part 70. For this purpose, there is arranged on the actuation part 70 a slave piston 82 which is guided displaceably in a slave cylinder 84 arranged on the base part 18. In this case, a slave chamber 86 is formed within the slave cylinder 84, wherein the slave cylinder 84 is in the form of a single-acting cylinder in the embodiment illustrated. Furthermore - as can be seen from Figure 1 - a master cylinder 88 for pressurizing the slave cylinder 84 is arranged on the base part 18. The master cylinder 88 is arranged further toward the inside in the radial direction 10 than the slave cylinder 84, and accommodates a master piston 92 which can be driven by a drive apparatus 90. The master cylinder 88 is in the form of an annular cylinder, whereas the driveable master piston 92 is in the form of an annular piston. The master cylinder 88 and master piston 92 are accordingly of encircling form in the circumferential direction 12, 14 around the axis of rotation 16, wherein the master piston 92 is arranged within the master cylinder 88 so as to be displaceable in the axial direction 4, 6. In this case, there is formed within the master cylinder 88 a master chamber 94 which is connected in terms of flow to the slave chamber 86 of the slave cylinder 84 via a line 96, which is merely indicated in Figure 2.

The above-mentioned drive apparatus 90 by means of which the master piston 92 can be driven or displaced in the axial directions 4, 6 is decoupled in terms of rotational drive from the master piston 92, which co-rotates with the base part 18 during the operation of the rotary vibration absorber 2. In the embodiment illustrated, this is effected by means of an engagement bearing 98, which is merely schematically illustrated in Figure 1. Consequently, the drive apparatus 90 can be designed to be static, as is the case in the embodiments illustrated. A static drive apparatus 90 is to be understood to mean a drive apparatus which is designed so as not to co-rotate with the rotary vibration absorber 2, wherein, in the embodiments illustrated, the drive apparatus 90 is for this purpose fastened in static fashion to a housing (not illustrated in any more detail) which does not co-rotate or which is static. Even though any drive apparatus 90 may be used here for the displacement of the master piston 92 within the master cylinder 88, the drive apparatus 90 is, in the embodiment illustrated, in the form of a static piston-cylinder arrangement. In this case, the piston-cylinder arrangement has a cylinder 100 and a piston 102 which is arranged in displaceable fashion in the cylinder 100 and which interacts via the engagement bearing 98 with the master piston 92 within the master cylinder 88.

If the master piston 92 is displaced in the axial direction 4 by means of the drive apparatus 90, the hydraulic medium is displaced out of the master chamber 94 into the slave chamber 86 of the slave cylinder 84 via the line 96, such that the actuation part 70 - as already explained above - is rotated relative to the base part 18 in the circumferential direction 12 about the axis of rotation 16. The movement of the actuation part 70 in said movement direction or circumferential direction 12 takes place counter to the spring force of a restoring spring 104. The restoring spring 104, which in this case is again in the form of a compression spring, preferably helical compression spring, is supported at one side on the base part 18 and at the other side on the actuation part 70. It would however alternatively also be possible for the restoring spring 104 to be supported at the other side on the slave piston 82. In a further alternative embodiment, the restoring spring 104 could interact at one side with the base part 18 and at the other side with the master piston 92, and, in this context, be arranged for example in the master chamber 94, as indicated by the dashed illustration in Figure 1. The restoring spring 104 effects a restoring movement of the actuation part 70 relative to the base part 18 in the opposite circumferential direction 14 when the master piston 92 is no longer displaced in the axial direction 4, or blocked, by the drive apparatus 90.

To adjust the restoring apparatus 28 in targeted fashion into a predetermined state and possibly be able to correct the state of the restoring apparatus 28 in targeted fashion, the rotary vibration absorber 2 is assigned at least one sensor for the indirect or direct detection of the state of the restoring apparatus 28. In the design variant in Figure 2, at least one static sensor is provided for detecting the position of the actuation part 70 relative to the base part 18, especially as the state of the restoring apparatus 28 can be inferred from the position of the actuation part 70 relative to the base part 18. In the design variant in Figure 2, a first static sensor 106 is provided for detecting the rotational position of the actuation part 70 and a second static sensor 108 is provided for detecting the rotational position of the base part 18. As an alternative to this, however, it is also possible for a single static sensor to be provided which serves both for detecting the rotational position of the actuation part 70 and for detecting the rotational position of the base part 18. Regardless of the respective design variant, it is possible from the rotational positions of the actuation part 70 and of the base part 18 to determine the rotational offset between the actuation part 70 and the base part 18, which is representative of the position of the actuation part 70 relative to the base part 18, wherein the sensors 106, 108 or the single sensor may for this purpose interact with a corresponding evaluation device.

The single static sensor or the two static sensors 106, 108 is/are in the form of incremental encoder(s). Accordingly, the first static sensor 106 is assigned a first structure 110, which is of encircling form in the circumferential direction 12, 14 and exhibits a regularly repeating pattern, on the actuation part 70, whereas the second static sensor 108 is assigned a second structure 112, which is of encircling form and exhibits a regularly repeating pattern, on the base part 18. The first structure 110 is in this case provided on an annular part 114, wherein the annular part 114 is connected rotationally conjointly to the actuation part 70. By contrast, the second structure 112 is provided on an annular part 116 which is connected rotationally conjointly to the base part 18.

In the embodiment illustrated, the static sensors 106, 108 are thus designed so as not to co-rotate with the rotary vibration absorber 2; rather, only the first and second structures 110, 112 which interact with the sensors 106, 108 are designed to co-rotate. Accordingly, the static sensors 106, 108 may be fastened for example to a housing which does not co-rotate, for example to a housing of the rotary vibration absorber 2. The static sensors 106, 108 also operate in contactless fashion, wherein optical, photoelectric or magnetic or inductive sensors 106, 108, for example, may be used as contactless sensors 106, 108. Although not illustrated, the sensors could however likewise be in the form of contact-type, for example sliding-contact sensors, wherein, as a contact-type incremental encoder, a gearwheel encoder, for example, may also be used as a first and/or second sensor 106, 108.

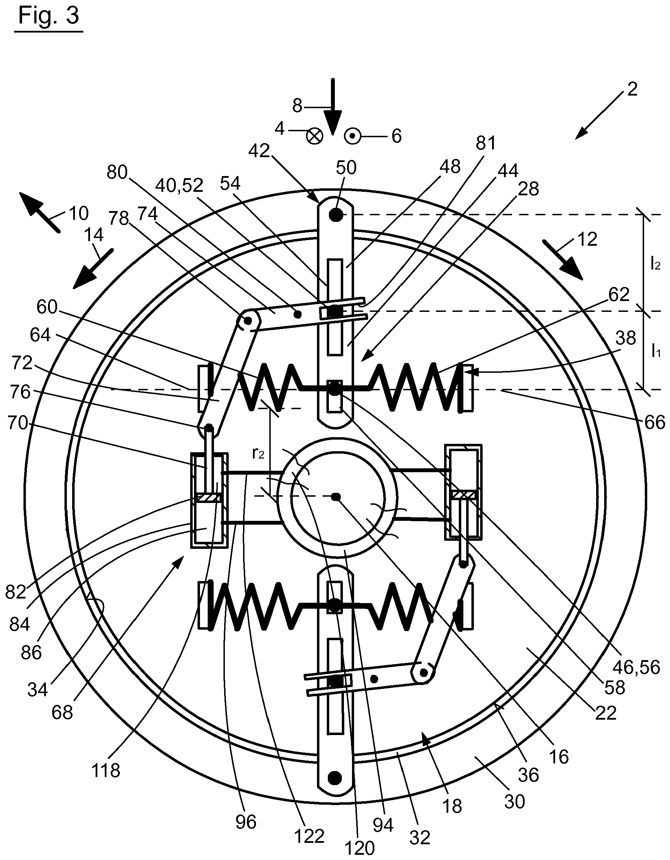

Figure 3 shows a further design variant of the rotary vibration damper 2 of Figure 1 which corresponds substantially to the design variant as per Figure 2, such that only the differences will be discussed below, the same reference signs are used for identical or similar parts, and the above description otherwise applies correspondingly.

It is also the case in the second design variant as per Figure 3 that the actuation part 70 can be moved relative to the base part 18 so as to adjust the restoring apparatus 28, wherein, in the second design variant, the actuation part 70 is displaceable in translational fashion relative to the base part 18. More precisely, the actuation part 70 is in this case displaceable rectilinearly relative to the base part 18, wherein the actuation part 70 is formed substantially by a tension/thrust rod. The actuation part 70 is also displaceable along a straight line which extends parallel to a radial line of the rotary vibration absorber 2 and spaced apart in the radial direction 8, 10 from the axis of rotation 16. The slave piston 82, which is fastened to the actuation part 70, is arranged in the slave cylinder 84 so as to divide the interior of the slave cylinder 84 into the above-mentioned slave chamber, or first slave chamber 86, and a second slave chamber 118. The slave cylinder 84 is consequently a double-acting cylinder in this case. The master cylinder 88 is also in the form of a double-acting cylinder, such that the above-mentioned master chamber, or first master chamber 94, and a second master chamber 120 are formed therein, whereas, in the first design variant as per Figure 2, basically only the master chamber 94 is required, such that the first design variant as per Figure 2 can also be said to involve a single-acting master cylinder 88. Whereas the first slave chamber 86 is connected in terms of flow to the first master chamber 94 via the line 96, the second slave chamber 118 is connected in terms of flow to the second master chamber 120 via a further line 122. As is already the case in the first design variant as per Figure 2, a closed hydraulic system is created in this way.

It is also the case in the design variant of the rotary vibration absorber 2 as per Figure 3 that a restoring spring 104 within the meaning of the restoring spring described above is provided, wherein the restoring spring may again be assigned to the actuation part 70, to the slave piston 82 or, as indicated by dashed lines in Figure 1, to the master piston 92, such that the actuation part 70, the slave piston 82 or the master piston 92 is movable in at least one direction of movement counter to the spring force of the restoring spring.

Similarly to the first design variant as per Figure 2, it is also possible for the rotary vibration absorber 2 as per Figure 3 to be assigned at least one or two static sensors. Since, however, the actuation part 70 is an actuation part 70 which is displaceable in translational fashion relative to the base part 18, and is not for example an actuation part which is rotatable relative to the base part 18 about the axis of rotation 16, the at least one static sensor should be designed so as to detect for example the position of the piston 102 of the drive apparatus 90 or - in general terms - the state of the drive apparatus 90. Alternatively, however, it is also possible in this case - as in the design variant as per Figure 2 - for one or more co-rotating sensors to be provided for the indirect or direct detection of the state of the restoring apparatus 28, wherein a co-rotating sensor is to be understood to mean a sensor which co-rotates with the rotary vibration absorber 2, that is to say is for example fastened to the base part 18, to the adjustment apparatus 68 or to the restoring apparatus 28. Accordingly, a correspondingly co-rotating sensor should preferably be designed such that it can detect the position of the actuation part 70 or of the articulation point 40, or of the projection 52 which forms the articulation point, relative to the base part 18. Here, too, the above-mentioned types of sensors can again be used.

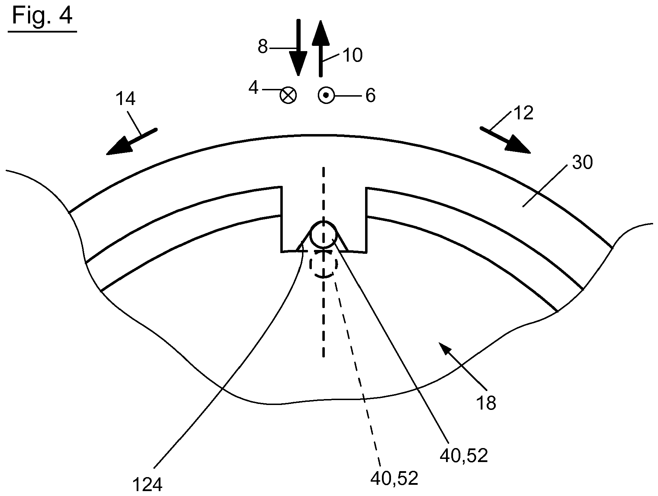

Below, a further feature of the rotary vibration absorbers 2 described above with reference to Figures 1 to 3 will be discussed with reference to Figure 4.

Accordingly, the restoring apparatus 28 can be adjusted into a blocking state in which the restoring apparatus 28 interacts with the inertial mass part 30 so as to prevent a rotation of the inertial mass part 30 relative to the base part 18. In this case, the restoring apparatus 28 may interact with the inertial mass part 30 either indirectly or directly. In the specific embodiment, the projection 52 which forms the articulation point 40 can be adjusted or displaced into an outer position as viewed in the radial direction 8, in which the projection 52 interacts with the inertial mass part 30 such that the latter, by positive locking, prevents a rotation relative to the base part 18. In the design variant illustrated in Figure 4, the positive locking is achieved in that the projection 52, in the outer position as viewed in the radial direction 8, is introduced into a receptacle 124 on the inertial mass part 30 or on the support part 32, such that the projection 52 is engaged behind by the inertial mass part 30 or by the support part 32 both in one circumferential direction 12 and in the other circumferential direction 14.

Alternatively, the restoring apparatus 28 can, in the blocking state, interact with the inertial mass part 30 so as to hinder, preferably by frictional contact, a rotation of the inertial mass part 30 relative to the base part 18, as indicated by dashed lines in Figure 4. In this case, the projection 52 which forms the articulation point 40, in its outer position as viewed in the radial direction 8, is not engaged behind in the circumferential directions 12, 14 by the inertial mass part 30 or by the support part 32; rather, the projection 52 is merely pressed with frictional contact against a surface, facing the projection 52, of the inertial mass part 30 or of the support part 32, whereupon corresponding frictional contact is generated. Consequently, the rotary vibration absorbers 2 as per Figures 1 to 4 are suitable in particular for a drivetrain with an automatic start-stop facility and during starting processes.

### LIST OF REFERENCE SIGNS

- 2: Rotary vibration absorber
- 4: Axial direction
- 6: Axial direction
- 8: Radial direction
- 10: Radial direction
- 12: Circumferential direction
- 14: Circumferential direction
- 16: Axis of rotation
- 18: Base part
- 20: Disk
- 22: Disk
- 24: Output hub
- 26: Input hub
- 28: Restoring apparatus
- 30: Inertial mass part
- 32: Support part
- 34: Side
- 36: Side
- 38: Spring device
- 40: Articulation point
- 42: Lever element
- 44: First lever section
- 46: Actuating force action point
- 48: Second lever section
- 50: Restoring force action point
- 52: Projection
- 54: Guide
- 56: Projection
- 58: Guide
- 60: First spring element
- 62: Second spring element
- 64: Longitudinal axis
- 66: Longitudinal axis
- 68: Adjustment apparatus
- 70: Actuation part
- 72: First actuation lever
- 74: Second actuation lever
- 76: Point
- 78: Point
- 80: Articulation point
- 81: Receptacle
- 82: Slave piston
- 84: Slave cylinder
- 86: First slave chamber
- 88: Master cylinder
- 90: Drive apparatus
- 92: Master piston
- 94: First master chamber
- 96: Line
- 98: Engagement bearing
- 100: Cylinder
- 102: Piston
- 104: Restoring spring
- 106: First static sensor
- 108: Second static sensor
- 110: First structure
- 112: Second structure
- 114: Annular part
- 116: Annular part
- 118: Second slave chamber
- 120: Second master chamber
- 122: Line
- 124: Receptacle

- d₁: Diameter
- d₂: Outer diameter
- d₃: Diameter
- l₁: Length
- l₂: Length
- r₁: Radial spacing
- r₂: Radial spacing

## Claims

1. A rotary vibration absorber (2) having a base part (18), which is rotatable about an axis of rotation (16), and having an inertial mass part (30) which is arranged on the base part (18) and which is rotatable relative to the base part (18) counter to the restoring force of a restoring apparatus (28), wherein the restoring apparatus (28) has a spring device (38) for generating an actuating force and has at least one lever element (42) which is pivotable about an articulation point (40) and via which the actuating force can be transmitted to the inertial mass part (30) so as to generate the restoring force which acts on the inertial mass part (30), **characterized in that** the restoring apparatus (28) can be adjusted, by means of an adjustment apparatus (68), so as to vary a restoring force characteristic curve of the restoring force that acts on the inertial mass part (30).

2. The rotary vibration absorber (2) as claimed in claim 1, **wherein** for varying the restoring force characteristic curve the lever ratio (l₁ / l₂) of the lever element (42) being variable and the articulation point (40) preferably being adjustable and/or displaceable so as to vary the lever ratio (l₁ / l₂) of the lever element (42).

3. The rotary vibration absorber (2) as claimed in one of claims 1 or 2, **wherein** the lever element (42) has a first lever section (44) between an actuating force action point (46) and the articulation point (40) and has a second lever section (48) between the articulation point (40) and a restoring force action point (50), the lengths (l₁, l₂) of which lever sections can be varied by rotation of the inertial mass part (30) relative to the base part (18), with the lever ratio (l₁, l₂) being substantially maintained, it preferably being the case that two of the stated points, possibly the articulation point (40) on the one hand and the actuating force action point (46) or the restoring force action point (50) on the other hand, are displaceable relative to the lever element (42) with variation of the lengths (l₁, l₂) of the lever sections (44, 48), and the remaining point particularly preferably being arranged immovably on the lever element (42).

4. The rotary vibration absorber (2) according to one of the preceding claims, **wherein** the restoring apparatus (28) is adjustable into a blocking state in which the restoring apparatus (28) interacts with the inertial mass part (30) so as to hinder, preferably by frictional contact, or prevent, preferably by positive locking, a rotation of the inertial mass part (30) relative to the base part (18), an adjustable or displaceable projection (52), which forms the articulation point (40), of the restoring apparatus (28) particularly preferably interacting with the inertial mass part (30).

5. The rotary vibration absorber (2) according to one of the preceding claims, **wherein** the spring device (38) has a first spring element (60) and a second spring element (62) which act on the lever element (42) in mutually opposite directions and which are possibly designed as compression springs or helical compression springs, the lever element (42) preferably being arranged in an initial state under preload of the first and second spring elements (60, 62), and the first and second spring elements (60, 62) particularly preferably being preloaded such that they both exert a respective actuating force on the lever element (42) over the maximum rotational angle range of the inertial mass part (30).

6. The rotary vibration absorber (2) as claimed in claim 5, **wherein** the first spring element (60) and the second spring element (62) each have a longitudinal axis (64, 66) which is offset radially outward in relation to the axis of rotation (16), the longitudinal axes (64, 66) preferably extending along a common straight line and/or parallel to a radial line and/or the spring elements (60, 62) particularly preferably being spaced apart from the axis of rotation (16) in a radial direction (8, 10).

7. The rotary vibration absorber (2) according to one of the preceding claims, **wherein** the adjustment apparatus (68) has an actuation part (70) which is arranged on the base part (18) and which is movable, preferably displaceable in translational fashion or rotatable about the axis of rotation (16), relative to the base part (18) with adjustment of the restoring apparatus (28), the actuation part (70) particularly preferably interacting by way of an actuation lever (72), possibly two actuation levers (72, 74) articulatedly connected to one another, with the articulation point (40), possibly with a projection (52) that forms the articulation point (40).

8. The rotary vibration absorber (2) as claimed in claim 7, **wherein** the actuation part (70) can be or is hydraulically driven, there preferably being provided on the actuation part (70) a slave piston (82) or slave cylinder which is arranged in or on a slave cylinder (84) or slave piston on the base part (18), and there particularly preferably being arranged on the base part (18) a master cylinder (88), if appropriate annular cylinder, which is arranged radially further inward than the slave cylinder (84) and which serves for pressurizing the slave cylinder (84) and in which there is arranged a driveable master piston (92), possibly annular piston.

9. The rotary vibration absorber (2) as claimed in claim 8, **wherein** the master piston (92) can be driven by a drive apparatus (90) which is decoupled in terms of rotary drive from the master piston (92), preferably by means of an engagement bearing (98), the drive apparatus (90) particularly preferably being of static form or being formed by a static piston-cylinder arrangement, and/or wherein the actuation part (70), the slave piston (82) or the master piston (92) is movable in at least one direction of movement counter to the spring force of a restoring spring (104), and/or wherein the slave cylinder (84) and the master cylinder (88) are in the form of double-acting cylinders.

10. The rotary vibration absorber (2) according to one of the preceding claims, **wherein** at least one sensor (106; 108) is provided for the indirect or direct detection of the state of the restoring apparatus (28), the sensor preferably being in the form of a co-rotating sensor for detecting the position of the actuation part (70) or of the articulation point (40), possibly of the projection (52) which forms the articulation point (40), relative to the base part (18), or in the form of a static sensor (106; 108) for detecting the position of the actuation part (70) relative to the base part (18).

11. The rotary vibration absorber (2) as claimed in claim 10, **wherein** the static sensor (106; 108) is designed for detecting the rotational position of the actuation part (70) and for detecting the rotational position of the base part (18), or a first static sensor (106) is provided for detecting the rotational position of the actuation part (70) and a second static sensor (108) is provided for detecting the rotational position of the base part (18), the rotational offset between actuation part (70) and base part (18), which rotational offset is representative of the position of the actuation part (70) relative to the base part (18), being determinable from the rotational positions of the actuation part (70) and of the base part (18).

12. The rotary vibration absorber (2) according to claim 10 or 11, **wherein** the at least one static sensor (106, 108) is in the form of a contactless, preferably optical, photoelectric or magnetic sensor, or in the form of a contact-type, preferably sliding-contact sensor and/or a sensor fixed with respect to a housing, the at least one static sensor (106, 108) particularly preferably being in the form of an incremental encoder, possibly gearwheel encoder.

13. The rotary vibration absorber (2) according to one of the preceding claims, **wherein** the inertial mass part (30) is rotatable relative to the base part (18) while maintaining a predetermined radial spacing (r₁) to the axis of rotation (16), and/or is of annular form.

14. The rotary vibration absorber (2) according to one of the preceding claims, **wherein** at least one support part (32) is provided which is connected rotationally conjointly to the inertial mass part (30) and which, supporting the inertial mass part (30) at the inside in the radial direction (8, 10), is or can be supported in the region of a diameter (d₁) which is smaller than the greatest outer diameter (d₂) of the base part (18), which support part is or can be supported at the inside in the radial direction (8, 10) preferably substantially in the region of the same diameter (d₃) as the base part (18), the support part (32) particularly preferably being of disk-shaped form, at least partially having a smaller extent in an axial direction (4, 6) than the inertial mass part (30), and/or being arranged between two disks (20, 22) of the base part (18) as viewed in the axial direction (4, 6).

15. The rotary vibration absorber (2) as claimed in claim 14, wherein the support by the support part (32) is realized with a spacing between that side (34) of the inertial mass part (30) which faces inward in the radial direction (10) and that side (36) of the base part (18) which faces outward in the radial direction (8) toward the inertial mass part (30), the inertial mass part (30) being supportable or supported at the inside in the radial direction (8, 10) preferably exclusively via the support part (32).

## Patentansprüche

1. Drehschwingungstilger (2), der ein Basisteil (18) aufweist, das um eine Drehachse (16) drehbar ist, und der ein Trägheitsmassenteil (30) aufweist, das auf dem Basisteil (18) angeordnet ist und in Bezug zu dem Basisteil (18) entgegen der Rückstellkraft einer Rückstellvorrichtung (28) drehbar ist, wobei die Rückstellvorrichtung (28) eine Federeinrichtung (38) zum Erzeugen einer Stellkraft aufweist und mindestens ein Hebelelement (42) aufweist, das um einen Anlenkpunkt (40) schwenkbar ist und über das die Stellkraft auf das Trägheitsmassenteil (30) übertragen werden kann, um die Rückstellkraft zu erzeugen, die auf das Trägheitsmassenteil (30) wirkt, **dadurch gekennzeichnet, dass** die Rückstellvorrichtung (28) mittels einer Verstellvorrichtung (68) verstellt werden kann, um eine Rückstellkraftkennlinie der Rückstellkraft zu variieren, die auf das Trägheitsmassenteil (30) wirkt.

2. Drehschwingungstilger (2) nach Anspruch 1, wobei für das Variieren der Rückstellkraftkennlinie das Hebelverhältnis (l₁/l₂) des Hebelelements (42) variabel ist und der Anlenkpunkt (40) bevorzugt verstellbar und/oder verschiebbar ist, um das Hebelverhältnis (l₁/l₂) des Hebelelements (42) zu variieren.

3. Drehschwingungstilger (2) nach Anspruchl oder 2, wobei das Hebelelement (42) einen ersten Hebelabschnitt (44) zwischen einem Stellkraftangriffspunkt (46) und dem Anlenkpunkt (40) aufweist und einen zweiten Hebelabschnitt (48) zwischen dem Anlenkpunkt (40) und einem Rückstellkraftangriffspunkt (50) aufweist, wobei die Längen (l₁, l₂) der Hebelabschnitte durch Drehen des Trägheitsmassenteils (30) in Bezug zu dem Basisteil (18) variiert werden können, wobei das Hebelverhältnis (l₁, l₂) im Wesentlichen erhalten wird, wobei es bevorzugt der Fall ist, dass zwei der gegebenen Punkte, gegebenenfalls der Anlenkpunkt (40) einerseits und der Stellkraftangriffspunkt (46) oder der Rückstellkraftangriffspunkt (50) andererseits, in Bezug zu dem Hebelelement (42) mit Variation der Längen (l₁, l₂) der Hebelabschnitte (44, 48) verschiebbar sind, und der übrige Punkt besonders bevorzugt unbeweglich auf dem Hebelelement (42) angeordnet ist.

4. Drehschwingungstilger (2) nach einem der vorstehenden Ansprüche, wobei die Rückstellvorrichtung (28) in einen Arretierzustand verstellt werden kann, in dem die Rückstellvorrichtung (28) mit dem Trägheitsmassenteil (30) zusammenwirkt, um eine Drehung des Trägheitsmassenteils (30) in Bezug zu dem Basisteil (18) zu erschweren, bevorzugt durch Reibkontakt, oder zu verhindern, bevorzugt durch Formschluss, wobei ein verstellbarer oder verschiebbarer Vorsprung (52), der den Anlenkpunkt (40) bildet, der Rückstellvorrichtung (28) besonders bevorzugt mit dem Trägheitsmassenteil (30) zusammenwirkt.

5. Drehschwingungstilger (2) nach einem der vorstehenden Ansprüche, wobei die Federeinrichtung (38) ein erstes Federelement (60) und ein zweites Federelement (62) aufweist, die in zueinander entgegengesetzten Richtungen auf das Hebelelement (42) wirken und die gegebenenfalls als Druckfedern oder Schraubendruckfedern ausgebildet sind, wobei das Hebelelement (42) bevorzugt in einem Ausgangszustand unter einer Vorspannung des ersten und zweiten Federelements (60, 62) angeordnet ist, und das erste und zweite Federelement (60, 62) besonders bevorzugt so vorgespannt sind, dass beide eine jeweilige Stellkraft über den maximalen Drehwinkelbereich des Trägheitsmassenteils (30) auf das Hebelelement (42) ausüben.

6. Drehschwingungstilger (2) nach Anspruch 5, wobei das erste Federelement (60) und das zweite Federelement (62) jeweils eine Längsachse (64, 66) aufweisen, die in Bezug zu der Drehachse (16) radial nach außen versetzt ist, wobei sich die Längsachsen (64, 66) bevorzugt entlang einer gemeinsamen geraden Linie und/oder parallel zu einer radialen Linie und/oder den Federelementen (60, 62) erstrecken, besonders bevorzugt in radialer Richtung (8, 10) von der Drehachse (16)beabstandet.

7. Drehschwingungstilger (2) nach einem der vorstehenden Ansprüche, wobei die Verstellvorrichtung (68) ein Stellteil (70) aufweist, das auf dem Basisteil (18) angeordnet ist und das in Bezug zu dem Basisteil (18) mit Verstellen der Rückstellvorrichtung (28) beweglich ist, bevorzugt auf gleitende Art verschiebbar oder um die Drehachse (16) drehbar ist, wobei das Stellteil (70) besonders bevorzugt über einen Stellhebel (72), gegebenenfalls zwei Stellhebel (72, 74), die gelenkig miteinander verbunden sind, mit dem Anlenkpunkt (40), gegebenenfalls mit einem Vorsprung (52), der den Anlenkpunkt (40) bildet, zusammenwirkt.

8. Drehschwingungstilger (2) nach Anspruch 7, wobei das Stellteil (70) hydraulisch angetrieben werden kann oder ist, wobei an dem Stellteil (70) bevorzugt ein Nehmerkolben (82) oder ein Nehmerzylinder bereitgestellt ist, der in oder an einem Nehmerzylinder (84) oder Nehmerkolben an dem Basisteil (18) angeordnet ist, und wobei an dem Basisteil (18) besonders bevorzugt ein Geberzylinder (88), gegebenenfalls ein Ringzylinder, angeordnet ist, der radial weiter innen angeordnet ist als der Nehmerzylinder (84) und der zum Druckbeaufschlagen des Nehmerzylinders (84) dient und in dem ein antreibbarer Geberkolben (92), gegebenenfalls ein Ringkolben, angeordnet ist.

9. Drehschwingungstilger (2) nach Anspruch 8, wobei der Geberkolben (92) von einer Antriebsvorrichtung (90) angetrieben werden kann, die bezüglich des Drehantriebs von dem Geberkolben (92) entkoppelt ist, bevorzugt durch ein Einrücklager (98), wobei die Antriebsvorrichtung (90) besonders bevorzugt eine statische Form aufweist oder von einer statischen Kolben-Zylinder-Anordnung gebildet wird, und/oder wobei das Stellteil (70), der Nehmerkolben (82) oder der Geberkolben (92) in mindestens eine Bewegungsrichtung entgegen der Federkraft einer Rückstellfeder (104) beweglich ist, und/oder wobei der Nehmerzylinder (84) und der Geberzylinder (88) die Form von doppeltwirkenden Zylindern aufweisen.

10. Drehschwingungstilger (2) nach einem der vorstehenden Ansprüche, wobei mindestens ein Sensor (106; 108) für das indirekte oder direkte Erfassen des Zustands der Rückstellvorrichtung (28) bereitgestellt ist, wobei der Sensor bevorzugt die Form eines mitlaufenden Sensors zum Erfassen der Position des Stellteils (70) oder des Anlenkpunkts (40), gegebenenfalls des Vorsprungs (52), der den Anlenkpunkt (40) bildet, in Bezug zu dem Basisteil (18) oder die Form eines statischen Sensors (106; 108) zum Erfassen der Position des Stellteils (70) in Bezug zu dem Basisteil (18) aufweist.

11. Drehschwingungstilger (2) nach Anspruch 10, wobei der statische Sensor (106; 108) dazu ausgebildet ist, die Verdrehposition des Stellteils (70) zu erfassen und die Verdrehposition des Basisteils (18) zu erfassen, oder ein erster statischer Sensor (106) bereitgestellt ist, die Verdrehposition des Stellteils (70) zu erfassen, und ein zweiter statischer Sensor (108) bereitgestellt ist, die Verdrehposition des Basisteils (18) zu erfassen, wobei der Drehversatz zwischen Stellteil (70) und Basisteil (18), welcher die Position des Stellteils (70) in Bezug zu dem Basisteil (18) darstellt, anhand der Verdrehpositionen des Stellteils (70) und des Basisteils (18) bestimmbar ist.

12. Drehschwingungstilger (2) nach Anspruch 10 oder 11, wobei der mindestens eine statische Sensor (106, 108) die Form eines kontaktlosen, bevorzugt optischen, photoelektrischen oder magnetischen Sensors aufweist, oder die Form eines Kontakt-, bevorzugt Gleitkontakt-Sensors und/oder eines Sensors, der in Bezug auf ein Gehäuse befestigt ist, aufweist, wobei der mindestens eine statische Sensor (106, 108) besonders bevorzugt die Form eines Inkrementalgebers, gegebenenfalls eines Zahnradgebers aufweist.

13. Drehschwingungstilger (2) nach einem der vorstehenden Ansprüche, wobei das Trägheitsmassenteil (30) in Bezug zu dem Basisteil (18) drehbar ist, während es einen vorab festgelegten radialen Abstand (r₁) zur Drehachse (16) aufrechterhält, und/oder ringförmig ist.

14. Drehschwingungstilger (2) nach einem der vorstehenden Ansprüche, wobei mindestens ein Stützteil (32) bereitgestellt ist, das drehfest mit dem Trägheitsmassenteil (30) verbunden ist und das, indem es das Trägheitsmassenteil (30) innen in radialer Richtung (8, 10) abstützt, im Bereich eines Durchmessers (d₁), der kleiner als der größte Außendurchmesser (d₂) des Basisteils (18) ist, abgestützt wird oder werden kann, wobei das Stützteil innen in radialer Richtung (8, 10) abgestützt wird oder werden kann, bevorzugt im Wesentlichen im Bereich des gleichen Durchmessers (d₃) wie das Basisteil (18), wobei das Stützteil (32) besonders bevorzugt scheibenförmig ist, zumindest teilweise in axialer Richtung (4, 6) einen geringeren Umfang aufweist als das Trägheitsmassenteil (30), und/oder zwischen zwei Scheiben (20, 22) des Basisteils (18), in axialer Richtung (4, 6) betrachtet, angeordnet ist.

15. Drehschwingungstilger (2) nach Anspruch 14, wobei das Abstützen durch das Stützteil (32) mit einer Beabstandung zwischen der Seite (34) des Trägheitsmassenteils (30), die in radialer Richtung (10) nach innen gerichtet ist, und der Seite (36) des Basisteils (18), die in radialer Richtung (8) nach außen in Richtung des Trägheitsmassenteils (30) gerichtet ist, umgesetzt ist, wobei das Trägheitsmassenteil (30) innen in radialer Richtung (8, 10) bevorzugt ausschließlich über das Stützteil (32) abgestützt werden kann oder wird.

## Revendications

1. Amortisseur de vibrations rotatif (2) ayant une partie de base (18) qui peut tourner autour d'un axe de rotation (16), et ayant une partie de masse d'inertie (30) qui est disposée sur la partie de base (18) et qui peut tourner par rapport à la partie de base (18) à l'encontre de la force de restauration d'un appareil de restauration (28), l'appareil de restauration (28) ayant un dispositif de ressort (38) pour générer une force d'actionnement et ayant au moins un élément de levier (42) qui peut pivoter autour d'un point d'articulation (40) par le biais duquel la force d'actionnement peut être transmise à la partie de masse d'inertie (30) de manière à générer la force de restauration qui agit sur la partie de masse d'inertie (30), **caractérisé en ce que** l'appareil de restauration (28) peut être ajusté au moyen d'un appareil d'ajustement (68) de manière à faire varier une courbe caractéristique de la force de restauration qui agit sur la partie de masse d'inertie (30).

2. Amortisseur de vibrations rotatif (2) selon la revendication 1, **dans lequel,** pour faire varier la courbe caractéristique de la force de restauration, le rapport de levier (l₁/l₂) de l'élément de levier (42) est variable et le point d'articulation (40) est de préférence ajustable et/ou déplaçable de manière à faire varier le rapport de levier (l₁/l₂) de l'élément de levier (42).

3. Amortisseur de vibrations rotatif (2) selon l'une des revendications 1 ou 2, **dans lequel** l'élément de levier (42) présente une première section de levier (44) entre un point d'action de force d'actionnement (46) et le point d'articulation (40) et présente une deuxième section de levier (48) entre le point d'articulation (40) et un point d'action de force de restauration (50), les longueurs (l₁, l₂) des sections de levier pouvant être variées par rotation de la partie de masse d'inertie (30) par rapport à la partie de base (18), le rapport de levier (l₁, l₂) étant sensiblement maintenu, et de préférence deux des points mentionnés, par exemple le point d'articulation (40) d'une part et le point d'action de force d'actionnement (46) ou le point d'action de force de restauration (50) d'autre part, pouvant être déplacés par rapport à l'élément de levier (42) avec variation des longueurs (l₁, l₂) des sections de levier (44, 48) et le point restant étant particulièrement préférablement disposé de manière immobile sur l'élément de levier (42).

4. Amortisseur de vibrations rotatif (2) selon l'une des revendications précédentes, **dans lequel** l'appareil de restauration (28) peut être ajusté dans un état de blocage dans lequel l'appareil de restauration (28) interagit avec la partie de masse d'inertie (30) de manière à gêner, de préférence par contact de friction, ou à empêcher, de préférence par verrouillage positif, une rotation de la partie de masse d'inertie (30) par rapport à la partie de base (18), une saillie ajustable ou déplaçable (52) qui forme le point d'articulation (40) de l'appareil de restauration (28) interagissant particulièrement préférablement avec la partie de masse d'inertie (30) .

5. Amortisseur de vibrations rotatif (2) selon l'une des revendications précédentes, **dans lequel** le dispositif de ressort (38) présente un premier élément de ressort (60) et un deuxième élément de ressort (62) qui agissent sur l'élément de levier (42) dans des directions mutuellement opposées et qui sont par exemple conçus sous forme de ressorts de compression ou sous forme de ressorts de compression hélicoïdaux, l'élément de levier (42) étant de préférence disposé dans un état initial précontraint par le premier et le deuxième élément de ressort (60, 62), et le premier et le deuxième élément de ressort (60, 62), particulièrement préférablement, étant précontraints de telle sorte qu'ils exercent tous les deux une force d'actionnement respective sur l'élément de levier (42) au-delà de la plage angulaire de rotation maximale de la partie de masse d'inertie (30).

6. Amortisseur de vibrations rotatif (2) selon la revendication 5, **dans lequel** le premier élément de ressort (60) et le deuxième élément de ressort (62) présentent chacun un axe longitudinal (64, 66) décalé radialement vers l'extérieur par rapport à l'axe de rotation (16), les axes longitudinaux (64, 66) s'étendant de préférence le long d'une ligne droite commune et/ou parallèlement à une ligne radiale et/ou les éléments de ressort (60, 62), particulièrement préférablement, étant espacés de l'axe de rotation (16) dans une direction radiale (8, 10).

7. Amortisseur de vibrations rotatif (2) selon l'une des revendications précédentes, **dans lequel** l'appareil d'ajustement (68) présente une partie d'actionnement (70) qui est disposée sur la partie de base (18) et qui peut être déplacée, de préférence déplacée en translation ou en rotation autour de l'axe de rotation (16), par rapport à la partie de base (18) avec ajustement de l'appareil de restauration (28), la partie d'actionnement (70), particulièrement préférablement, interagissant par le biais d'un levier d'actionnement (72), par exemple de deux leviers d'actionnement (72, 74) connectés de manière articulée l'un à l'autre, avec le point d'articulation (40), par exemple avec une saillie (52) qui forme le point d'articulation (40).

8. Amortisseur de vibrations rotatif (2) selon la revendication 7, **dans lequel** la partie d'actionnement (70) peut être ou est entraînée hydrauliquement, un piston esclave (82) ou un cylindre esclave étant de préférence prévu sur la partie d'actionnement (70), lequel est disposé dans ou sur un cylindre esclave (84) ou un piston esclave sur la partie de base (18), et un maître-cylindre (88) étant particulièrement préférablement disposé sur la partie de base (18), le cas échéant un cylindre annulaire, qui est disposé radialement plus vers l'intérieur que le cylindre esclave (84) et qui sert à pressuriser le cylindre esclave (84) et dans lequel est disposé un maître-piston pouvant être entraîné (92), par exemple un piston annulaire.

9. Amortisseur de vibrations rotatif (2) selon la revendication 8, **dans lequel** le maître-piston (92) peut être entraîné par un appareil d'entraînement (90) qui est désaccouplé, en termes d'entraînement en rotation, du maître-piston (92), de préférence au moyen d'un palier d'engagement (98), l'appareil d'entraînement (90), particulièrement préférablement, étant sous forme statique ou étant formé par un agencement statique de piston-cylindre, et/ou dans lequel la partie d'actionnement (70), le piston esclave (82) ou le maître-piston (92) peut être déplacé dans au moins une direction de mouvement à l'encontre de la force de ressort d'un ressort de restauration (104), et/ou dans lequel le cylindre esclave (84) et le maître-cylindre (88) se présentent sous la forme de cylindres à double action.

10. Amortisseur de vibrations rotatif (2) selon l'une des revendications précédentes, **dans lequel** au moins un capteur (106 ; 108) est prévu pour la détection directe ou indirecte de l'état de l'appareil de restauration (28), le capteur étant de préférence sous la forme d'un capteur co-rotatif pour détecter la position de la partie d'actionnement (70) ou du point d'articulation (40), par exemple de la saillie (52) qui forme le point d'articulation (40), par rapport à la partie de base (18), ou sous la forme d'un capteur statique (106 ; 108) pour détecter la position de la partie d'actionnement (70) par rapport à la partie de base (18).

11. Amortisseur de vibrations rotatif (2) selon la revendication 10, **dans lequel** le capteur statique (106 ; 108) est conçu pour détecter la position de rotation de la partie d'actionnement (70) et pour détecter la position de rotation de la partie de base (18), ou un premier capteur statique (106) est prévu pour détecter la position de rotation de la partie d'actionnement (70) et un deuxième capteur statique (108) est prévu pour détecter la position de rotation de la partie de base (18), le décalage rotationnel entre la partie d'actionnement (70) et la partie de base (18), lequel décalage rotationnel est représentatif de la position de la partie d'actionnement (70) par rapport à la partie de base (18), pouvant être déterminé à partir des positions de rotation de la partie d'actionnement (70) et de la partie de base (18).

12. Amortisseur de vibrations rotatif (2) selon la revendication 10 ou 11, **dans lequel** l'au moins un capteur statique (106, 108) est sous la forme d'un capteur sans contact, de préférence optique, photoélectrique ou magnétique, ou sous la forme d'un capteur de type à contact, de préférence à contact glissant et/ou d'un capteur fixe par rapport à un boîtier, l'au moins un capteur statique (106, 108) particulièrement préférablement étant sous la forme d'un codeur incrémental, par exemple un codeur à roue dentée.

13. Amortisseur de vibrations rotatif (2) selon l'une des revendications précédentes, **dans lequel** la partie de masse d'inertie (30) peut tourner par rapport à la partie de base (18) tout en maintenant un espacement radial prédéterminé (r₁) par rapport à l'axe de rotation (16), et/ou est sous forme annulaire.

14. Amortisseur de vibrations rotatif (2) selon l'une des revendications précédentes, **dans lequel** au moins une partie de support (32) est prévue, laquelle est connectée en rotation conjointement avec la partie de masse d'inertie (30) et laquelle, supportant la partie de masse d'inertie (30) à l'intérieur dans la direction radiale (8, 10), est ou peut être supportée dans la région d'un diamètre (d₁) qui est plus petit que le plus grand diamètre extérieur (d₂) de la partie de base (18), laquelle partie de support est ou peut être supportée à l'intérieur dans la direction radiale (8, 10), de préférence substantiellement dans la région du même diamètre (d₃) que la partie de base (18), la partie de support (32) particulièrement préférablement étant en forme de disque, ayant au moins en partie une plus petite étendue dans une direction axiale (4, 6) que la partie de masse d'inertie (30), et/ou étant disposée entre deux disques (20, 22) de la partie de base (18), vu dans la direction axiale (4, 6).

15. Amortisseur de vibrations rotatif (2) selon la revendication 14, **dans lequel** le support par la partie de support (32) est réalisé avec un espacement entre le côté (34) de la partie de masse d'inertie (30) qui est tourné vers l'intérieur dans la direction radiale (10) et le côté (36) de la partie de base (18) qui est tourné vers l'extérieur dans la direction radiale (8) vers la partie de masse d'inertie (30), la partie de masse d'inertie (30) pouvant être supportée ou étant supportée à l'intérieur dans la direction radiale (8, 10) de préférence exclusivement par le biais de la partie de support (32).
